# FASCICULE DE BREVET EUROPEEN

(11) **EP 1 921 247 B1**
(45) Date de publication et mention de la délivrance du brevet: **24.04.2013**
(21) Numéro de dépôt: 06023106.5
(22) Date de dépôt: 07.11.2006
(51) Int. Cl.: E06B 9/76, G05G 1/08, F16C 1/02

(54) **Dispositif de transmission pour l'entrainement d'un store**
Antriebsübertragung für einen Rolladen
Transmission member for actuating a blind

(43) Date de publication de la demande: 14.05.2008
(73) Titulaire: Cherubini S.p.A., 25081 Bedizzole (BS) (IT)
(72) Inventeur: Cherubini, Lionello, 25080 Soiano del Lago (BS) (IT); Villa, Elio, 25081 Bedizzole (BS) (IT)
(74) Mandataire: Micheli & Cie SA

(56) Documents cités:
- EP-A1- 0 375 493
- FR-A- 2 346 948
- FR-A- 2 848 241
- NL-A- 8 802 921

## Description

La présente invention a pour objet un dispositif de transmission pour l'entraînement d'un store intérieur ou extérieur, par exemple d'un store à lamelle, de volets roulants, de stores empilables etc. comportant un arbre d'entraînement d'un treuil pivoté dans un palier ou rotule fixé au caisson relié à un embout d'entraînement.

Généralement, l'embout d'entraînement est relié mécaniquement et est solidaire, par l'intermédiaire d'un cardan par exemple, de l'extrémité d'un organe de manoeuvre comportant à son autre extrémité une manivelle; voir par exemple FR-A-2 848 241.

Fréquemment, dans le cas de stores ou de volets roulants équipant notamment les baies vitrées pourvues de portes ou de fenêtres à la française, l'embout d'entraînement est situé au-dessus des charnières ou gonds de ces portes ou fenêtres, et la manivelle qui lui est reliée gène l'ouverture complète de ces portes ou fenêtres.

La présente invention a pour but la réalisation d'un dispositif de transmission pour l'entraînement d'un store du type précité comprenant un treuil dont l'arbre d'entraînement comporte un embout d'entraînement relié à l'extrémité d'un organe de manoeuvre comportant une manivelle ou tringle oscillante qui obvie aux inconvénients précités et dans lequel l'organe de manoeuvre ou tringle oscillante ne gène pas l'ouverture de la porte ou de la fenêtre équipée du store.

La présente invention a pour objet un dispositif de transmission pour l'entraînement d'un store qui se distingue par les caractéristiques énoncées à la revendication 1.

Le dessin annexé illustre une forme d'exécution du dispositif de transmission pour l'entraînement d'un store selon l'invention.
La figure 1 est une vue partielle du dispositif illustrant la liaison entre l'arbre d'entraînement et l'organe de manoeuvre en position accouplée mais au repos.
La figure 2 est une vue similaire à la figure 1 mais pendant l'actionnement de l'organe de manoeuvre montrant l'inclinaison de la tringle de l'organe de manoeuvre.

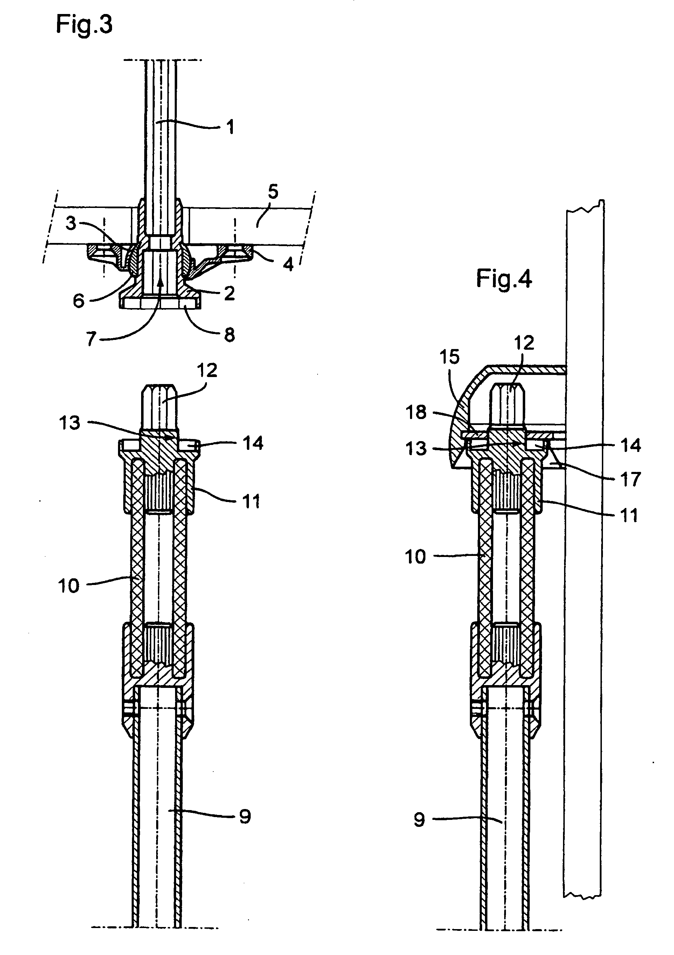

La figure 3 illustre l'embout de l'arbre d'entraînement et l'organe de manoeuvre en position désaccouplée.
La figure 4 illustre l'organe de manoeuvre disposé dans un support de rangement.

Pour réaliser le but recherché, soit que la tige inclinable de l'organe de manoeuvre ne gêne pas l'ouverture d'une porte ou d'une fenêtre située sous le store à manoeuvrer, on a imaginé d'accoupler l'extrémité de la tige inclinable ou organe de manoeuvre à l'embout fixé à l'extrémité de l'arbre d'entraînement du treuil du store de façon facilement désaccouplable par une simple traction axiale. Cet accouplement temporaire entre l'organe de manoeuvre et l'arbre d'entraînement est réalisé par un accouplement magnétique à l'aide d'aimants permanents.

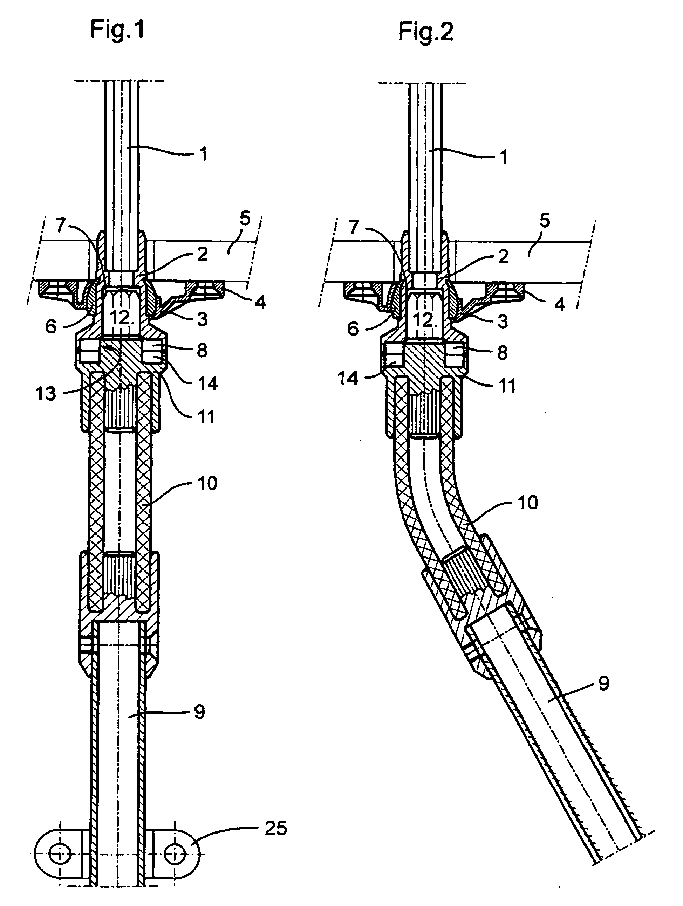

En référence à la figure 1 du dessin, le dispositif de transmission selon l'invention comporte un arbre d'entraînement 1 d'un treuil (non illustré) d'un store ou volet roulant dont l'extrémité comporte un embout d'entraînement. Cet embout 2 est relié à une paroi ou au caisson du store par une rotule dont la partie femelle 3 est portée par une plaque 4 vissée dans la paroi 5 et la partie mâle est formée par une portion de sphère 6 faisant partie de, ou rapportée sur la paroi externe de l'embout d'entraînement 2.

L'embout d'entraînement 2 comporte un évidement axial 7 présentant la forme d'un six-pans débouchant sur l'extrémité libre de cet embout 2. L'extrémité frontale de cet embout 2 présente un logement cylindrique, coaxial à l'évidement axial 7, dans lequel est fixé un premier aimant permanent annulaire 8. Le diamètre du passage central de ce premier aimant permanent annulaire 8 est égal ou supérieur au diamètre circonscrit à l'évidement axial 7 de forme hexagonale.

L'organe de commande du dispositif comporte une tige 9 comportant à son extrémité inférieure une manivelle repliable ou non (non illustrée). L'extrémité supérieure de cette tige 9 est solidaire d'une extrémité d'un joint élastique 10. Ce joint élastique 10 peut être incurvé, mais est rigide en torsion pour transmettre le couple d'actionnement du treuil du store. L'autre extrémité du joint élastique 10 est fixée sur un embout de tige 11 comportant une formation d'entraînement 12 constituée par une protubérance axiale 12 en forme de six-pans, dont les dimensions correspondent au six-pans creux 7 de l'embout d'entraînement 2 de l'arbre d'entraînement 1. Cette protubérance axiale 12 est le prolongement d'un moyeu axial cylindrique 13 que comporte l'embout de tige 11 autour duquel est fixé un second aimant permanent annulaire 14 dont les diamètres interne et externe correspondent aux diamètres interne et externe du premier aimant permanent 8.

Ainsi, l'embout de tige 11 peut être accouplé et désaccouplé de l'embout d'entraînement 2 simplement en introduisant la protubérance en forme de six-pans 12 dans l'évidement en forme de six-pans correspondant 7 et en appliquant les aimants permanents annulaires 8, 14 l'un contre l'autre.

La force d'attraction des aimants permanents 8, 14 est supérieure aux poids de l'organe de manoeuvre de sorte que celui-ci puisse rester accouplé à l'embout d'entraînement 2.

Ainsi, en position enclenchée, illustrée aux figures 1, 2, l'usager peut, en actionnant la manivelle de l'organe de manoeuvre 9, 10, 11 manoeuvrer le treuil du store.

Avant de procéder à l'ouverture de la porte ou de la fenêtre qui pourrait être gênée par l'organe de manoeuvre 9, 10, 11, l'usager tire sur la tige 9 provoquant le désaccouplement de l'embout de tige 11 de l'embout d'entraînement 2 et range l'organe de manoeuvre à un endroit ou il ne gêne pas.

Un support 15 peut être prévu à cet effet et fixé sur une paroi 16 à proximité du store. Ce support présente un logement accessible depuis sa face inférieure à travers une ouverture conique 17 d'un diamètre, à son extrémité de plus petit diamètre, correspondant au diamètre extérieur de l'embout de tige 11. Ce support comporte encore une plaque métallique 18 percée d'un trou axé sur l'ouverture conique 17 d'un diamètre correspondant au diamètre du moyeu 13 de l'embout de tige 11.

Ainsi l'organe de manoeuvre 9, 10, peut être suspendu dans ce support 15, l'aimant permanent 14 venant se plaquer contre la plaque métallique 18.

Dans des variantes, la forme de l'évidement 7 et de la protubérance 12 pourrait être différente pour autant qu'elle ne soit pas circulaire et permette donc un emboîtement et la transmission d'un couple.

L'avantage d'un dispositif avec deux aimants permanents par rapport à un dispositif traditionnel, est le fait que lors de l'enclenchement de l'embout 11 avec celui d'entraînement 2 même si les deux pièces ne sont pas rigoureusement en face l'une de l'autre, le champ magnétique les attire et les positionne toujours exactement dans l'axe du système permettant leur enclenchement automatique.

Dans cette forme d'exécution du dispositif de transmission pour l'entraînement d'un store, l'accouplement magnétique 8, 14 entre l'embout d'entraînement 2 et l'embout de tige 11 et le joint élastique 10 constituent un dispositif de liaison entre l'extrémité de l'arbre d'entraînement 1 sortant du caisson 5 et la partie supérieure de la tige 9 de l'organe de manoeuvre 9,10,11 qui permet l'escamotage de la partie supérieure, ici son retrait, pour que l'ouvrant d'une fenêtre protégée par le store puisse s'ouvrir complètement sans être entravée par l'organe de manoeuvre du store. Dans une variante le joint élastique 10 peut être remplacé par un joint à cardan traditionnel.

## Revendications

1. Dispositif de transmission pour l'entraînement d'un store comportant un treuil muni d'un arbre d'entraînement dont une extrémité traverse un caisson dans lequel est logé le store et est reliée à ce caisson par un palier à rotule et un organe de manoeuvre comportant à son extrémité inférieure une manivelle, **caractérisé par le fait que** l'extrémité de l'arbre d'entraînement (1) sortant du caisson (5) est solidaire d'un embout d'entraînement (2); **par le fait que** l'organe de manoeuvre (9, 10, 11) comporte, à son extrémité supérieure opposée à la manivelle, un embout de tige(11); **par le fait que** l'embout d'entraînement (2) et l'embout de tige (11) comportent des formations d'entraînement correspondantes (7, 12) s'enclenchant et se déclenchant par simples déplacements axiaux relatifs ; et **par le fait que** l'embout d'entraînement (2) et l'embout de tige (11) comportent des premiers respectivement seconds organes d'accouplement formés par des aimants permanents pouvant s'accoupler respectivement se désaccoupler par simples déplacements axiaux relatifs des embouts (2, 11).

2. Dispositif selon la revendication 1, **caractérisé par le fait qu'**il comporte un support (25) de maintien de la tige (9) permettant un déplacement axial et en rotation de cette tige (9).

3. Dispositif selon la revendication 1, **caractérisé par le fait que** les aimants permanents sont annulaires.

4. Dispositif selon la revendication 1, **caractérisé par le fait que** les formations d'entraînement sont constituées d'une protubérance (12) et d'un évidement (7) correspondants de section non circulaire.

5. Dispositif selon la revendication 4, **caractérisé par le fait que** la protubérance (12) est solidaire de l'embout de tige (11) et que l'évidement (7) est formé dans l'embout d'entraînement (2).

6. Dispositif selon l'une des revendications 1 à 5, **caractérisé par le fait qu'**il comporte encore un support permettant de suspendre l'organe de manoeuvre (9, 10, 11) lorsqu'il est déclenché de l'embout d'entraînement (2).

## Claims

1. Transmission device for actuating a blind comprising a winch provided with a drive shaft, one end of which traverses a box housing the blind and is connected to this box by a swivel bearing and a manoeuvring member comprising a crank arm at its lower end, **characterised in that** the end of the drive shaft (1) exiting the box (5) is fixedly attached to a drive ferrule (2); **in that** the manoeuvring member (9, 10, 11) has a rod ferrule (11) at its upper end opposite to the crank arm; **in that** the drive ferrule (2) and the rod ferrule (11) have corresponding drive formations (7, 12) which engage and disengage each other by simple relative axial displacements; and **in that** the drive ferrule (2) and the rod ferrule (11) have respective first and second coupling members formed by permanent magnets able to be coupled and decoupled with respect to each other by simple relative axial displacements of the ferrules (2, 11).

2. Device as claimed in claim 1, **characterised in that** it has a support (25) for holding the rod (9) permitting an axial and rotational displacement of this rod (9).

3. Device as claimed in claim 1, **characterised in that** the permanent magnets are annular.

4. Device as claimed in claim 1, **characterised in that** the drive formations are formed by a corresponding protrusion (12) and recess (7) with a non-circular cross-section.

5. Device as claimed in claim 4, **characterised in that** the protrusion (12) is fixedly attached to the rod ferrule (11) and that the recess (7) is formed in the drive ferrule (2).

6. Device as claimed in any one of claims 1 to 5, **characterised in that** it also has a support (15) permitting the manoeuvring member (9, 10, 11) to be suspended when it is disengaged from the drive ferrule (2).

## Patentansprüche

1. Kraftübertragungsvorrichtung für den Antrieb einer Jalousie, welches aufweist: eine Winde, die mit einer Antriebswelle ausgestattet ist, deren eines Ende einen Kasten durchquert, in welchem die Jalousie aufgenommen ist, und mit diesem Kasten durch ein Gelenklager verbunden ist, und ein Betätigungselement, das an seinem unteren Ende eine Kurbel aufweist, **dadurch gekennzeichnet, dass** das aus dem Kasten (5) austretende Ende der Antriebswelle (1) mit einem Antriebsendstück (2) fest verbunden ist; dadurch, dass das Betätigungselement (9, 10, 11) an seinem oberen, der Kurbel gegenüberliegenden Ende ein Stangenendstück (11) aufweist; dadurch, dass das Antriebsendstück (2) und das Stangenendstück (11) einander entsprechende Antriebsformationen (7, 12) aufweisen, die durch einfache relative axiale Verschiebungen eingerückt und ausgerückt werden; und dadurch, dass das Antriebsendstück (2) und das Stangenendstück (11) erste bzw. zweite, von Permanentmagneten gebildete Kupplungsglieder aufweisen, die durch einfache relative axiale Verschiebungen der Endstücke (2, 11) gekuppelt bzw. entkuppelt werden können.

2. Vorrichtung nach Anspruch 1, **dadurch gekennzeichnet, dass** es eine Halterung (25) der Stange (9) aufweist, die eine axiale Verschiebung und eine Drehbewegung dieser Stange (9) ermöglicht.

3. Vorrichtung nach Anspruch 1, **dadurch gekennzeichnet, dass** die Permanentmagneten ringförmig sind.

4. Vorrichtung nach Anspruch 1, **dadurch gekennzeichnet, dass** die Antriebsformationen aus einem Vorsprung (12) und einer Aussparung (7), die einander entsprechen, mit nicht kreisförmigem Querschnitt bestehen.

5. Vorrichtung nach Anspruch 4, **dadurch gekennzeichnet, dass** der Vorsprung (12) mit dem Stangenendstück (11) fest verbunden ist, und dass die Aussparung (7) in dem Antriebsendstück (2) ausgebildet ist.

6. Vorrichtung nach einem der Ansprüche 1 bis 5, **dadurch gekennzeichnet, dass** sie außerdem einen Halter (15) aufweist, der es ermöglicht, das Betätigungselement (9, 10, 11) aufzuhängen, wenn es aus dem Antriebsendstück (2) ausgerückt ist.
